# FASCICULE DE BREVET EUROPEEN

(11) **EP 1 467 825 B1**
(45) Date de publication et mention de la délivrance du brevet: **26.11.2008**
(21) Numéro de dépôt: 02790441.6
(22) Date de dépôt: 20.11.2002
(51) Int. Cl.: B09B 3/00, A62D 3/00

(54) **PROCEDE D'INERTAGE DE RESIDUS MINERAUX**
VERFAHREN ZUR INERTISIERUNG VON INORGANISCHEN RÜCKSTÄNDEN
METHOD FOR INERTING MINERAL RESIDUES

(30) Priorité: 21.11.2001 FR 0115143
(43) Date de publication de la demande: 20.10.2004
(73) Titulaire: SOLVAY (Société Anonyme), 1050 Bruxelles (BE)
(72) Inventeur: DEPELSENAIRE, Guy, B-1490 Court-Saint-Etienne (BE)
(74) Mandataire: Jacques, Philippe
(86) Numéro de dépôt international: PCT/EP2002/013322
(87) Numéro de publication internationale: WO 2003/043752

(56) Documents cités:
- WO-A-92/16262
- WO-A-97/31874
- PATENT ABSTRACTS OF JAPAN vol. 2000, no. 20, 10 juillet 2001 (2001-07-10) & JP 2001 079513 A (KURITA WATER IND LTD), 27 mars 2001 (2001-03-27)
- PATENT ABSTRACTS OF JAPAN vol. 2000, no. 22, 9 mars 2001 (2001-03-09) & JP 2001 121105 A (KURITA WATER IND LTD), 8 mai 2001 (2001-05-08)

## Description

La présente invention concerne un procédé d'inertage de résidus minéraux. Plus particulièrement, elle concerne un procédé d'inertage de résidus de broyage d'automobiles.

Par inertage d'un résidu, on entend un traitement à l'issue duquel les substances toxiques qu'il contient y sont immobilisées et ne présentent plus de risque de contamination de l'environnement.

Les quantités sans cesse grandissantes de véhicules automobiles hors d'usage (V.H.U.) posent des problèmes sérieux pour l'élimination des résidus qui en résultent.

Les législations nationales imposent des taux de récupération et recyclage importants des matières constitutives des véhicules automobiles. Afin de satisfaire ces exigences, il est courant que les automobiles soient broyées, afin de permettre la séparation et la récupération des métaux, principalement ferreux. Les résidus qui subsistent après cette récupération, appelés communément Résidus de Broyage Automobile (« RBA ») représentent toutefois encore environ 25% du poids du véhicule original. Ces résidus comprennent des substances organiques, souvent toxiques, et des métaux lourds. Ces substances toxiques sont susceptibles de contaminer l'environnement, en particulier par lixiviation, si elles ne sont pas suffisamment immobilisées dans le résidu.

Il existe différents tests normalisés auxquels doit satisfaire tout résidu en vue de sa valorisation ou même sa mise en décharge.

Les résidus de broyage automobile ne satisfont généralement pas ces tests. En, particulier, les quantités de chrome « VI » et de plomb détectables dans les lixiviats dépassent fortement les normes imposées. Ces résidus doivent donc subir un traitement préalable d'inertage.

Un procédé connu pour inerter les résidus de broyage automobile consiste à les soumettre à un traitement thermique de vitrification effectué à haute température, de l'ordre de 1300 °C.

Ce procédé connu présente cependant le désavantage de provoquer la volatilisation d'une partie importante des métaux lourds contenus dans le résidu traité. Il est dès lors nécessaire d'épurer les fumées issues du dit traitement.

D'autre part, les températures élevées utilisées dans ce traitement connu impliquent une consommation d'énergie importante.

Le document WO 92/16262 décrit un procédé d'inertage du plomb dans des résidus solides secs sous forme de particules, selon lequel de l'acide phosphorique est mis en contact avec les résidus secs solides. Ce procédé est apparu fournir des résidus non suffisamment inertés.

L'invention vise à remédier aux inconvénients précités en fournissant un procédé d'inertage de résidus de broyage automobile simple et économique qui rende ces résidus inoffensifs afin de permette leur valorisation ou leur mise en décharge.

En conséquence, l'invention concerne un procédé d'inertage de résidus minéraux comprenant des résidus de broyage d'automobiles, selon lequel les résidus minéraux sont additionnés d'eau de manière à former une pâte, la pâte est mélangée à de l'acide phosphorique et le mélange résultant est soumis à une calcination.

Selon l'invention, les résidus minéraux comprennent des résidus de broyage d'automobiles. En général ils en comprennent plus de 35 % en poids. Souvent ils en comprennent plus de 50 %. Ils peuvent aussi comprendre des résidus électroménagers tels que frigos, cuisinières, également broyés. Enfin, les résidus minéraux peuvent comprendre des résidus provenant de collectes diverses, par exemple issus de la démolition d'immeubles.

Les résidus minéraux soumis au traitement selon l'invention sont composés de fragments, de granulométrie en général inférieure à 5 mm. Toutefois certains fragments de type fibreux ont une longueur qui atteint parfois 10 mm. La granulométrie moyenne est en deçà de 5 mm.

Dans un mode d'exécution avantageux du procédé selon l'invention, les résidus minéraux sont broyés de telle sorte que leur granulométrie moyenne est inférieure à 2 mm, de préférence comprise entre 0,5 et 1,5 mm.

Les fragments sont très hétérogènes : fragments métalliques, fragments de verre, de plastique, de bois, de textile,..., le tout noyé dans une masse indistincte qui contient des hydrocarbures. La teneur en hydrocarbures des résidus minéraux est le plus souvent comprise entre 10 et 20 % en poids. La densité apparente du résidu est ordinairement inférieure à 1. La teneur en eau du résidu, évaluée par volumétrie Karl Fischer, est généralement comprise entre 3 et 5 %.

Les résidus minéraux soumis à l'inertage selon l'invention contiennent peu de carbonate de calcium. Cette teneur est généralement inférieure à 6 % en poids.

Fréquemment, la teneur en carbonate de calcium des résidus minéraux est inférieure à 4 %. On préfère qu'elle dépasse néanmoins 1 %.

Les résidus minéraux soumis au procédé selon l'invention contiennent des métaux lourds. On entend désigner par métaux lourds, les métaux dont la masse spécifique est au moins égale à 5g/cm³, ainsi que le bérillium, l'arsenic, le sélénium et l'antimoine, conformément à la définition généralement admise (Heavy Metals in Wastewater and Sludge Treatment Processes ; vol I, CRC Press Inc, 1987; p.2).

Conformément à l'invention, les résidus minéraux sont additionnés d'eau pour les convertir en une pâte. Le mot pâte est entendu ici au sens rhéologique, qui désigne un liquide visqueux. La quantité d'eau à ajouter dépend de la teneur en eau initiale du résidu. Il est avantageux d'ajouter une quantité d'eau telle que la pâte obtenue contienne entre 20 et 50 % en poids d'eau, ce qui dans la majorité des cas correspond à un ajout de 15 à 47 % en poids d'eau.

La pâte obtenue est ensuite mélangée à de l'acide phosphorique. Des quantités d'acide phosphorique comprises entre 5 et 20 % en poids de résidus minéraux à traiter conviennent bien. On préfère cependant que cette quantité soit supérieure à 7 %. Avantageusement elle ne dépasse pas 15 %. L'ajout de l'eau et de l'acide phosphorique se font sous agitation. Toute technique d'agitation et mélange peut être utilisée. Des mélangeurs à soc ou l'utilisation de vis sans fin donnent de bons résultats.

Le mélange résultant est soumis à une calcination. La calcination est réalisée à une température supérieure à 500 °C, pendant une durée suffisante, afin que les matières organiques soient correctement détruites. De manière avantageuse, la température de calcination reste inférieure à 1000 °C, pour éviter la volatilisation de métaux lourds.

Selon une première variante préférée du procédé selon l'invention, la température de calcination est comprise entre 630 et 680 °C. Cette variante d'exécution fournit un résidu traité qui garde une texture pulvérulente.

Selon une seconde variante préférée du procédé selon l'invention, la température de calcination est comprise entre 730 et 780 °C. Dans cette variante, la texture du résidu est plus massive mais reste friable.

Selon une troisième variante préférée du procédé selon l'invention, la température de calcination est comprise entre 830 et 900 °C. Selon cette variante, on obtient un résidu traité partiellement vitrifié qui présente une bonne résistance mécanique.

Dans certains cas et pour certaines applications, il peut s'avérer utile d'ajouter un liant hydraulique au résidu traité et le cas échéant de l'eau, pour provoquer la prise du liant. Le produit final obtenu peut alors avoir des propriétés mécaniques remarquables.

On a observé que de manière très surprenante, les résidus minéraux comprenant des résidus de broyage d'automobiles, malgré leur faible teneur en carbonate de calcium, donnent lieu, lors de la calcination, à la formation de pyrophosphate de calcium. Sans vouloir être tenu par une explication théorique, l'inventeur pense que ce pyrophosphate de calcium est un piège à métaux lourds.

Les exemples dont la description suit vont faire apparaître l'intérêt de l'invention.

### Première série d'essais

Dans cette série d'essais, on a opéré au départ de résidus de broyage dits « lourds ». Ce sont les résidus recueillis directement en aval du broyage.

### Exemple 1 (non conforme à l'invention)

On a traité des résidus minéraux ayant la composition suivante :

| Element | % en poids |
|---|---|
| Cd | 0,0026 |
| Cr | 0,06 |
| Cu | 0,54 |
| Fe | 10,3 |
| Ni | 0,11 |
| Pb | 0,73 |
| Zn | 1,8 |
| CaCO3 | 3,1 |

Les résidus minéraux on été mélangés à 20 % d'eau au moyen d'une vis sans fin à température ambiante puis calcinés 2heures à 620 °C, départ four froid, sous air avec circulation forcée.

Le produit résultant a été soumis au test de triple lixiviation, décrit dans la norme française NFX 31 - 210. Le protocole du test consiste à broyer la matière de manière à pouvoir la passer au travers d'un tamis de 4mm. Cette matière broyée est soumise à une triple lixiviation avec de l'eau déminéralisée, dans un rapport liquide/solide égal à 10, sous agitation constante. A l'issue de chaque lixiviation on mesure la teneur en métaux lourds du liquide de lavage de la poudre soumise au test.

Les résultats obtenus ont été les suivants :

| 1 ère lixiviation | | | 2 ème lixiviation | | | 3ème lixiviation | | |
|---|---|---|---|---|---|---|---|---|
| pH | Cr VI | Pb | pH | Cr VI | Pb | pH | Cr VI | Pb |
| | (mg/l) | (mg/l) | | (mg/l) | (mg/l) | | (mg/l) | (mg/l) |
| 11,6 | 3,9 | 16 | 11,2 | 1,0 | <0,03 | 11,0 | 1,7 | <0,03 |

### Exemple 2 (conforme à l'invention)

On a procédé comme dans l'exemple précédent sauf que 10 % d'acide phosphorique à été mélangé au résidu, également au moyen d'une vis sans fin, avant sa calcination.

Les résultats du test de lixiviation furent les suivants :

| 1 ère lixiviation | | | 2 ème lixiviation | | | 3ème lixiviation | | |
|---|---|---|---|---|---|---|---|---|
| pH | Cr VI | Pb | pH | Cr VI | Pb | pH | Cr VI | Pb |
| | (mg/l) | (mg/l) | | (mg/l) | (mg/l) | | (mg/l) | (mg/l) |
| 9,3 | 0,08 | <0,03 | 10,1 | <0.002 | <0,03 | 9,9 | <0,002 | <0,03 |

### Deuxième série d'essais

Dans cette série d'essais on a opéré au départ de résidus de broyage dits « légers ». Ces résidus sont recueillis indirectement sous forme de « poussières » émises dans l'atmosphère, lors du broyage.

### Exemple 3 (conforme à l'invention)

On a procédé comme dans l'exemple précédent, sauf que la calcination a été faite à 875 °C et que la composition initiale du résidu à traiter était la suivante :

| Element | % en poids |
|---|---|
| Cd | 0,003 |
| Cr | 0,065 |
| Cu | 0,47 |
| Fe | (non mesuré) |
| Ni | 0,07 |
| Pb | 1,41 |
| Zn | 2,2 |

Les résultats du test de lixiviation furent les suivants :

| 1 ère lixiviation | | | 2 ème lixiviation | | | 3ème lixiviation | | |
|---|---|---|---|---|---|---|---|---|
| pH | Cr VI | Pb | pH | Cr VI | Pb | pH | Cr VI | Pb |
| | (mg/l) | (mg/l) | | (mg/l) | (mg/l) | | (mg/l) | (mg/l) |
| 11,3 | <0,002 | <0,03 | 10,8 | <0,002 | <0,03 | 10,9 | <0,002 | <0,03 |

Ces exemples illustrent l'effet d'inertage surprenant obtenu par le procédé conforme à l'invention, malgré la très faible teneur du résidu minéral en carbonate de calcium.

## Revendications

1. Procédé d'inertage de résidus minéraux comprenant des résidus de broyage d'automobiles, selon lequel les résidus sont inertés au moyen d'acide phosphorique, **caractérisé en ce que** les résidus minéraux sont additionnés d'eau de manière à former une pâte, la pâte est mélangée à l'acide phosphorique et le mélange résultant est soumis à une calcination.

2. Procédé selon la revendication précédente, **caractérisé en ce que** la granulométrie moyenne des résidus minéraux est comprise entre 0,5 et 1,5 mm.

3. Procédé selon l'une quelconque des revendications précédentes, **caractérisé en ce que** la quantité d'acide phosphorique mélangée est comprise entre 5 et 20 %.

4. Procédé selon la revendication précédente, **caractérisé en ce que** la quantité d'acide phosphorique mélangée est comprise entre 7 et 15 %.

5. Procédé selon l'une quelconque des revendications précédentes, **caractérisé en ce que** la calcination est effectuée à une température comprise entre 630 et 680 °C.

6. Procédé selon l'une quelconque des revendications 1 à 4, **caractérisé en ce que** la calcination est effectuée à une température comprise entre 730 et 780 °C.

7. Procédé selon l'une quelconque des revendications 1 à 4, **caractérisé en ce que** la calcination est effectuée à une température comprise entre 830 et 900 °C.

## Claims

1. Method of inerting mineral residues comprising automobile grinding residues, according to which the residues are inerted with phosphoric acid and in which method water is added to the mineral residues so as to form a paste, the paste is mixed with phosphoric acid, and the resulting mixture undergoes a calcination operation.

2. Method according to the preceding claim, **characterized in that** the mean particle size of the mineral residues is between 0.5 and 1.5 mm.

3. Method according to either of the preceding claims, **characterized in that** the amount of phosphoric acid mixed is between 5 and 20 %.

4. Method according to the preceding claim, **characterized in that** the amount of phosphoric acid mixed is between 7 and 15%.

5. Method according to any one of the preceding claims, **characterized in that** the calcination is carried out at a temperature between 630 and 680 °C.

6. Method according to any one of Claims 1 to 4, **characterized in that** the calcination is carried out at a temperature between 730 and 780 °C.

7. Method according to any one of Claims 1 to 4, **characterized in that** the calcination is carried out at a temperature between 830 and 900 °C.

## Patentansprüche

1. Verfahren zur Inertisierung von mineralischen Rückständen, die Autozerkleinerungsrückstände umfassen, gemäß dem die Rückstände mit Hilfe von Phosphorsäure inertisiert werden, **dadurch gekennzeichnet, daß** man die mineralischen Rückstände so mit Wasser versetzt, daß sich eine Paste ergibt, die Paste mit Phosphorsäure mischt und die erhaltene Mischung einer Calcinierung unterwirft.

2. Verfahren nach dem vorhergehenden Anspruch, **dadurch gekennzeichnet, daß** die mittlere Teilchengröße der mineralischen Rückstände zwischen 0,5 und 1,5 mm liegt.

3. Verfahren nach einem der vorhergehenden Ansprüche, **dadurch gekennzeichnet, daß** die zugemischte Phosphorsäuremenge zwischen 5 und 20% liegt.

4. Verfahren nach dem vorhergehenden Anspruch, **dadurch gekennzeichnet, daß** die zugemischte Phosphorsäuremenge zwischen 7 und 15% liegt.

5. Verfahren nach einem der vorhergehenden Ansprüche, **dadurch gekennzeichnet, daß** man die Calcinierung bei einer Temperatur zwischen 630 und 680°C durchführt.

6. Verfahren nach einem der Ansprüche 1 bis 4, **dadurch gekennzeichnet, daß** man die Calcinierung bei einer Temperatur zwischen 730 und 780°C durchführt.

7. Verfahren nach einem der Ansprüche 1 bis 4, **dadurch gekennzeichnet, daß** man die Calcinierung bei einer Temperatur zwischen 830 und 900°C durchführt.
